**Europäisches Patentamt**

**European Patent Office**　(11) Veröffentlichungsnummer:　**0 167 673**

**Office européen des brevets**　**A1**

(12)　## EUROPÄISCHE PATENTANMELDUNG

(21) Anmeldenummer: **84115572.4**

(22) Anmeldetag: **17.12.84**

(51) Int. Cl.⁴: **H 04 N 5/32**

(30) Priorität: **08.06.84 DE 3421461**

(43) Veröffentlichungstag der Anmeldung:
**15.01.86　Patentblatt　86/3**

(84) Benannte Vertragsstaaten:
**DE FR**

(71) Anmelder: **Siemens Aktiengesellschaft
Berlin und München Wittelsbacherplatz 2
D-8000 München 2(DE)**

(72) Erfinder: **Finkler, Klaus
Wehneltstrasse 14
D-8520 Erlangen(DE)**

(72) Erfinder: **Wolf, Hans-Dieter
Heinrich-Hertz-Strasse 15
D-8520 Erlangen(DE)**

(54) **Röntgendiagnostikeinrichtung.**

(57) Die Erfindung betrifft eine Röntgendiagnostikeinrichtung mit einer Fernsehaufnahmeeinrichtung, mit wenigstens einem Bildspeicher, einer Differenzstufe zur Erstellung von Subtraktionsbildern durch Differenzbildung aus einem gespeicherten und einem dem gespeicherten zeitlich nachfolgenden Videosignal, mit einer Auswerteschaltung zur Zeitauswertung von Veränderungen des Differenzsignales und mit einem Monitor, bei der die Auswerteschaltung einen Zeitspeicher (17) enthält, in dem Informationen über den zeitlichen Kontrastmittelverlauf speicherbar sind, bei der die Auswerteschaltung weiterhin eine Schaltung (23 bis 29) enthält, die die in dem Zeitspeicher (17) gespeicherten Informationen wiederholt abfragt und jeweils nur diejenigen Bildpunkte auf dem Monitor darstellt, deren Informationen einem bestimmten Kriterium entsprechen, wobei schrittweise der Wert des Kriteriums gegenüber dem vorherigen erhöht wird.

FIG 3

Siemens Aktiengesellschaft        Unser Zeichen
Berlin und München                VPA 84 P 3 2 0 8 E

## Röntgendiagnostikeinrichtung

Die Erfindung betrifft eine Röntgendiagnostikeinrichtung mit einer Fernsehaufnahmeeinrichtung, mit wenigstens einem Bildspeicher, einer Differenzstufe zur Erstellung von Subtraktionsbildern durch Differenzbildung aus einem gespeicherten und einem dem gespeicherten zeitlich nachfolgenden Videosignal, mit einer Auswerteschaltung zur Zeitauswertung von Veränderungen des Differenzsignales und mit einem Monitor, bei der die Auswerteschaltung einen Zeitspeicher enthält, in dem Informationen über den zeitlichen Kontrastmittelverlauf speicherbar sind. Subtraktionsbilder finden bei Durchleuchtungen, insbesondere bei der selektiven Angiographie, Verwendung, um Blutgefäße, die im normalen Röntgenbild nur schlecht zu erkennen sind oder von Knochenstrukturen überlagert werden, deutlich sichtbar zu machen.

Aus der DE-PS 30 18 129 ist eine Subtraktionsvorrichtung bekannt, bei der eine Auswerteschaltung das zeitliche Auftreten von Veränderungen im Differenzbild erkennt und die entsprechenden Zeitinformationen in einen Zeitspeicher einliest. Diese Zeitinformationen bestehen aus Zahlenwerten, wobei die Größe der eingespeicherten Zahlenwerte das zeitliche Auftreten des Maximums des Kontrastmittelflusses kennzeichnet. In einem an dem Speicher angeschlossenen Farbumsetzer werden diese Zahlenwerte in Videosignale unterschiedlicher Farben umgewandelt und auf einem Farbmonitor wiedergegeben. Auf dem Monitor ist anhand dieses Farbbildes der Kontrastmittelverlauf in seiner Lage und dem zeitlichen Auftreten seines Maximums

Gse 2 Ler / 30.05.1984

zu erkennen. So ist beispielsweise eine von Kontrastmittel durchflossene Blutbahn farbig dargestellt, wobei beispielsweise die roten Bildpunkte einen frühen Zeitpunkt signalisieren, während die blauen Bildpunkte das zeitliche Ende des Kontrastmittelflusses wiedergeben. Nach erfolgter Aufnahme ist also nur das gesamte farbige Bild zu sehen. Eine wiederholte Darstellung des Kontrastmittelflusses ist nicht möglich. Auch muß in jedem Fall ein Farbmonitor vorhanden sein, um ein derartiges Subtraktionsbild richtig auswerten zu können.

Die Erfindung geht von der Aufgabe aus, eine Röntgendiagnostikeinrichtung der eingangs genannten Art zu schaffen, die eine dynamische Darstellung des Kontrastmittelflusses ermöglicht, so daß eine Darstellung auch auf einem Schwarz-Weiß-Monitor erfolgen kann.

Die Aufgabe wird erfindungsgemäß dadurch gelöst, daß die Auswerteschaltung weiterhin eine Schaltung enthält, die die in dem Zeitspeicher gespeicherten Informationen wiederholt abfragt und jeweils nur diejenigen Bildpunkte auf dem Monitor darstellt, deren Informationen einem bestimmten Kriterium entsprechen, wobei schrittweise der Wert des Kriteriums gegenüber dem vorherigen erhöht wird. Dadurch ist es möglich, nach erfolgter Zeiterfassung des Kontrastmittelflusses diesen wiederholt und mit beliebiger Geschwindigkeit auf dem Monitor darzustellen. Dies kann beispielsweise auf einem Schwarz-Weiß-Monitor erfolgen, wobei entweder beispielsweise die Bildpunkte, die dem Kontrastmittelverlauf entsprechen, weiß und die übrigen schwarz auf dem Monitor dargestellt werden, oder den Zeitwertinformationen Graustufen zugeordnet sind. Wird dagegen ein aus der DE-PS 30 18 129 bekannter Farbmonitor mit Farbumsetzer verwendet, so lassen sich die Zeitwertinformationen in Farbinformationen umsetzen.

Einen einfachen Aufbau der Schaltung erhält man, wenn an dem Zeitspeicher ein Komparator angeschlossen ist, mit dessen zweitem Eingang ein mit Taktimpulsen beaufschlagter Zähler verbunden ist, und wenn an dem Ausgang des Komparators eine Schaltstufe angeschlossen ist, die diejenigen Bildpunkte auf dem Monitor darstellt, deren Informationswert nicht größer als der Wert am Zählerausgang ist.

Die Erfindung ist nachfolgend anhand eines in der Zeichnung dargestellten Ausführungsbeispieles näher erläutert. Es zeigen:

Fig. 1 ein Blockschaltbild einer Röntgendiagnostikeinrichtung,

Fig. 2 ein Blockschaltbild der Subtraktionsschaltung der Röntgendiagnostikeinrichtung gemäß Figur 1, und

Fig. 3 ein Blockschaltbild der erfindungsgemäßen Ausführung der Auswerteschaltung gemäß Figur 2.

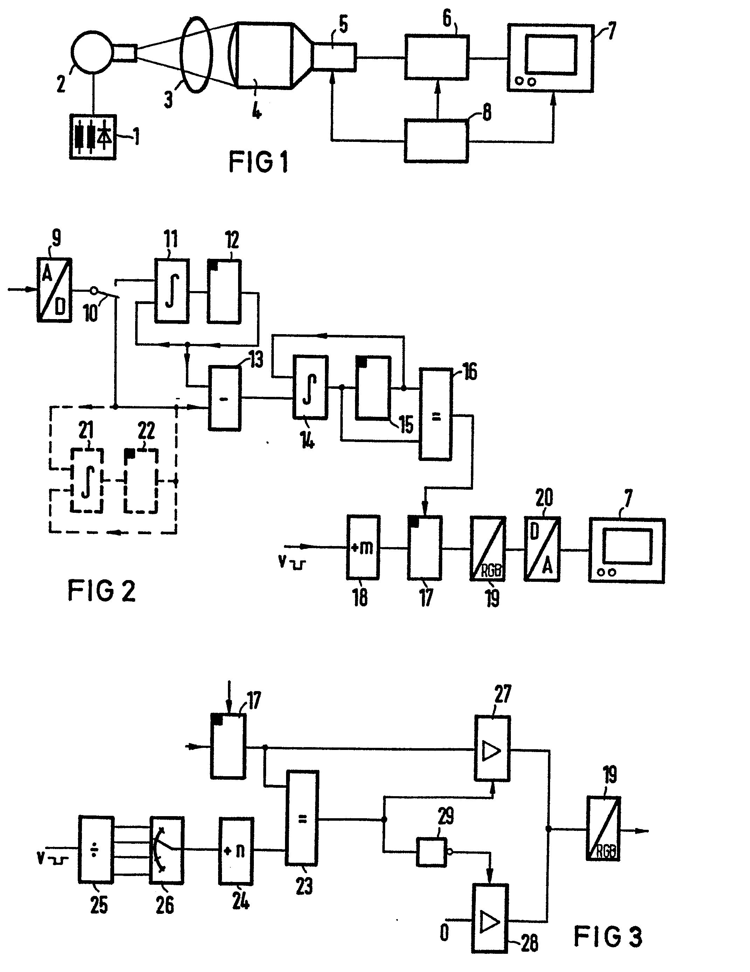

In Figur 1 ist eine Röntgendiagnostikeinrichtung mit einer von einem Hochspannungsgenerator 1 gespeisten Röntgenröhre 2 dargestellt, in deren Strahlengang sich ein Patient 3 befindet. Ein im Strahlengang nachfolgender Röntgenbildverstäker 4 ist mit einer Fernsehkamera 5 verbunden, deren Ausgang auf eine Subtraktionsschaltung 6 geführt ist. Das dort verarbeitete Signal wird auf einem Monitor 7 dargestellt. Ein Synchrontaktgenerator 8 steuert die Synchronisation der zeitlichen Funktionsabläufe der Fernsehkamera 5, der Subtraktionsschaltung 6 und des Monitors 7.

Der in Figur 2 dargestellten Subtraktionsschaltung 6 wird das Videosignal der Fernsehkamera 5 zugeführt, das in einem die Eingangsstufe bildenden Analog/Digital-Wandler (A/D-Wandler 9) in digitale Bildpunkte zerlegt wird. Der Ausgang des A/D-Wandlers 9 ist mit einem Umschalter 10 verbunden, dessen einer Schaltkontakt auf eine erste Integrationsstufe 11 geführt ist. Das Ausgangssignal der ersten Integrationsstufe 11 wird in einen ersten Bildspeicher 12 eingelesen, dessen Ausgang auf den Eingang der ersten Integrationsstufe 11 rückgekoppelt ist, so daß in dem ersten Bildspeicher 12 ein rauschvermindertes Bild enthalten ist. Der zweite Schaltkontakt des Umschalters 10 ist mit einer Differenzstufe 13 verbunden, in der das im ersten Bildspeicher 12 gespeicherte Videosignal vom aktuellen, dem gespeicherten nachfolgenden Videosignal abgezogen wird.

Das so gebildete Differenzsignal ist einer zweiten Integrationsstufe 14 zugeführt, deren Ausgang mit einem zweiten Bildspeicher 15 verbunden ist. Der Ausgang des zweiten Bildspeichers 15 ist auf die zweite Integrationsstufe 14 rückgekoppelt. Die Ausgangssignale der Integrationsstufe 14 und des zweiten Bildspeichers 15 werden in einem ersten Komparator 16 miteinander verglichen, dessen Ausgang mit einem Zeitspeicher 17 verbunden ist. Ein mit den Vertikalimpulsen V der Fernsehkamera 5 beaufschlagter Zeitzähler 18 ist mit dem Dateneingang des Zeitspeichers 17 verbunden. Das Ausgangssignal des Zeitspeichers 17 ist einem Farbumsetzer 19 zugeführt, dessen Ausgang mit einem Digital/Analog-Wandler (D/A-Wandler 20) verbunden ist, dessen analoges Ausgangssignal auf dem Monitor 7, in diesem Falle einem Farbmonitor, wiedergegeben wird.

Durch die zweite Integrationsstufe 14 und die über dem zweiten Bildspeicher 15 geführte Rückkopplungsschleife wird während der gesamten Durchleuchtung das Differenzsignal integriert. Die Ausgangssignale der zweiten Integrationsstufe 14 und des zweiten Bildspeichers 15 werden in dem ersten Komparator 16 verglichen. Ist der Ausgangswert der zweiten Integrationsstufe 14 eines Bildpunktes größer als der entsprechende Bildpunktwert des zweiten Bildspeichers 15, entsteht am Ausgang des ersten Komparators 16 ein positives Signal, das einen Speichervorgang in dem Zeitspeicher 17 auslöst, so daß in dem dem entsprechenden Bildpunkt zugeordneten Speicherplatz des Zeitspeichers 17 der von dem Zeitzähler 18 gelieferte Zahlenwert eingespeichert wird. Das bedeutet, daß der aktuelle integrierte Wert dieses Bildpunktes eine größere Schwärzung aufweist als der gespeicherte. Diese Schwärzung wird durch den fortschreitenden Kontrastmittelverlauf erzeugt.

Liefert dagegen der zweite Bildspeicher 15 ein gleich großes oder größeres Signal als die zweite Integrationsstufe 14, d.h. es war bereits eine Änderung, hervorgerufen durch den Kontrastmittelfluß, aufgetreten oder es fand keine Änderung statt, so liegt an dem Ausgang des Komparators 16 ein negatives Signal, das den Speichervorgang unterbricht. Durch diesen Vergleich bleibt in dem Zeitspeicher 17 jeweils derjenige Wert des Zeitzählers 18 gespeichert, der dem Maximum des Kontrastmittelflusses entspricht. Diese das zeitliche Auftreten des Maximums kennzeichnenden Ausgangswerte des Zeitspeichers 17 werden in dem Farbumsetzer 19 in Farbsignale umgewandelt und über dem D/A-Wandler 20 dem Monitor 7 zugeführt.

Um auch das aktuelle Bild möglichst vom Quantenrauschen zu befreien, können, wie in Figur 2 gestrichelt dargestellt, zwischen dem Umschalter 10 und der Differenzstufe 13 eine weitere Integrationsstufe 21 und ein weiterer Bildspeicher 22 vorgesehen sein. Diese Integration kann über eine variable Bildzahl erfolgen, die zweckmäßigerweise der Geschwindigkeit der Änderung des Kontrastmittelflusses angepaßt wird. Hierzu lassen sich anstelle der Integrationsstufen 11, 14 und 21 beispielsweise auch Rekursivfilterschaltungen verwenden.

In der Figur 3 ist ein Teil der Auswerteschaltung mit der Schaltung dargestellt, die eine nachträgliche dynamische Funktionsdarstellung ermöglicht. An dem Zeitspeicher 17 ist ein zweiter Komparator 23 angeschlossen, dessen zweiter Eingang mit einem Zähler 24 verbunden ist. Dem Zähler 24 werden Taktimpulse zugeführt, die aus den Vertikalimpulsen V der Fernsehkamera 5 durch einen Teiler 25 und einer daran angeschlossenen Wählstufe 26 abgeleitet werden. Dadurch lassen sich Takte mit verschiedenen Frequenzen auswählen. An dem zweiten Komparator 23 sind ein erster Schalttreiber 27 direkt und ein zweiter Schalttreiber 28 über eine Inverterstufe 29 mit ihren Schalteingängen angeschlossen. Mit dem Eingang des ersten Schalttreibers 27 ist der Ausgang des Zeitspeichers 17 verbunden. Der Eingang des zweiten Schalttreibers 28 ist beispielsweise auf Masse gelegt, so daß an seinem Eingang nur die Information Null liegt. Beide Schalttreiber 27 und 28 sind an dem Farbumsetzer 19 angeschlossen.

Ist nun die bereits beschriebene Zeiterfassung des Kontrastmittelflusses erfolgt und sind deren Werte in dem Zeitspeicher 17 enthalten, so wird der Zähler 24 auf Null gesetzt und beginnt anschließend die ihm zugeführten Taktimpulse zu zählen, die sehr viel kleiner sein können als die Vertikalimpulse V. Gleichzeitig wird mit erheblich höherer Frequenz der Zeitspeicher 17 bildpunktweise abgefragt. Stimmt nun der Informationswert
des Zeitspeichers 17 mit dem Zählerstand überein oder
ist der Informationswert kleiner, so liefert der zweite Komparator 23 ein positives Signal, so daß diese Informationswerte bildpunktweise durchgeschaltet und auf
dem Monitor 7 dargestellt werden. Überschreitet dagegen
der Informationswert den Zählerstand, so liefert der
zweite Komparator 23 ein negatives Signal, das durch den
Inverter 29 den zweiten Schalttreiber 28 durchschaltet,
so daß der Wert Null als schwarzer Bildpunkt auf dem
Monitor 7 dargestellt wird. Da der Stand des Zählers 24
sich langsam erhöht, werden immer mehr Bildpunktinformationen des Zeitspeichers 17 auf dem Monitor 7 dargestellt. Gleichzeitig werden die unterschiedlichen Größen
der Bildinformationen in unterschiedliche Farben umgesetzt, so daß auf dem Monitor 7 der Kontrastmittelfluß
durch die nacheinander erscheinenden Bildpunkte und
durch deren unterschiedliche Farbe erkennbar ist.

Die gleiche Anordnung ermöglicht aber auch eine Darstellung des Kontrastmittelflusses auf einem Schwarz-Weiß-
Monitor, wenn der Farbumsetzer 19 weggelassen wird. Dadurch werden dann die unterschiedlichen Zeitwertinformationen als unterschiedliche Grauwerte dargestellt. Da
diese Grauwerte teilweise nur schlecht zu erkennen sind,
ist es auch möglich, anstelle daß dem ersten Schalttreiber 27 die Informationen des Zeitspeichers 17 zugeführt
werden, an den Eingang des ersten Schalttreibers 27 einen festen Wert zu legen, der beispielsweise bewirkt,
daß die entsprechenden Bildpunkte auf dem Monitor 7 weiß
dargestellt werden. Dadurch läßt sich aber nur der dynamische Verlauf des Kontrastmittelflusses erkennen. Eine
zeitliche Auswertung bei vollständigem Bild ist nunmehr
nicht möglich.

Wenn in dem Bildspeicher 12 ein Bild ohne Kontrastmittel und in dem Bildspeicher 22 ein dazugehöriges Bild mit Kontrastmittel gespeichert ist, so ist es auch möglilich, dem ersten Schalttreiber 27 die Information der Differenzstufe 13 zuzuführen, so daß deren Differenzsignal bildpunktweise entsprechend der in dem Zeitspeicher enthaltenen Information auf den Monitor 7 durchgeschaltet wird. Dadurch kann auf einem Schwarz-Weiß-Monitor ein vollständiges Subtraktionsbild dynamisch dargestellt werden.

Durch die an dem Teiler 25 angeschlossene Wählstufe 26 lassen sich unterschiedliche, vom Teiler 25 gelieferte Teilerverhältnisse auswählen, so daß die dynamische Darstellung der Funktionsbilder des Kontrastmittelflusses in ihrer Geschwindigkeit variierbar ist. Dadurch lassen sich die relativ schnellen Vorgänge auch langsam betrachten. Auch wäre es denkbar, den dem Zähler 24 zugeführten Takt zu unterbrechen, so daß man Standbilder erhält, oder sogar manuell durch Tastendruck den Zählerstand schrittweise zu erhöhen, wobei die Schrittweite auch mehrere Stufen aufweisen kann.

2 Patentansprüche
3 Figuren

Patentansprüche

1. Röntgendiagnostikeinrichtung mit einer Fernsehaufnahmeeinrichtung (5), mit wenigstens einem Bildspeicher (12, 15, 22), einer Differenzstufe (13) zur Erstellung von Subtraktionsbildern durch Differenzbildung aus einem gespeicherten und einem dem gespeicherten zeitlich nachfolgenden Videosignal, mit einer Auswerteschaltung (14 bis 20) zur Zeitauswertung von Veränderungen des Differenzsignales und mit einem Monitor (7), bei der die Auswerteschaltung (14 bis 20) einen Zeitspeicher (17) enthält, in dem Informationen über den zeitlichen Kontrastmittelverlauf speicherbar sind, d a d u r c h   g e - k e n n z e i c h n e t , daß die Auswerteschaltung (14 bis 20) weiterhin eine Schaltung (23 bis 29) enthält, die die in dem Zeitspeicher (17) gespeicherten Informationen wiederholt abfragt und jeweils nur diejenigen Bildpunkte auf dem Monitor (7) darstellt, deren Informationen einem bestimmten Kriterium entsprechen, wobei schrittweise der Wert des Kriteriums gegenüber dem vorherigen erhöht wird.

2. Röntgendiagnostikeinrichtung nach Anspruch 1,   d a - d u r c h   g e k e n n z e i c h n e t ,   daß an dem Zeitspeicher (17) ein Komparator (23) angeschlossen ist, mit dessen zweitem Eingang ein mit Taktimpulsen beaufschlagter Zähler (24) verbunden ist, und daß an dem Ausgang des Komparators (23) eine Schaltstufe (27 bis 29) angeschlossen ist, die diejenigen Bildpunkte auf dem Monitor (7) darstellt, deren Informationswert nicht größer als der Wert am Ausgang des Zählers (24) ist.

Q167673

FIG 1

FIG 2

FIG 3

0167673
Nummer der Anmeidung

EP 84 11 5572

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A,D | DE-C-3 018 129  (SIEMENS)<br>* Insgesamt * | 1 | H 04 N   5/32 |
| | ----- | | |
| | | | **RECHERCHIERTE SACHGEBIETE (Int. Cl 4)** |
| | | | H 04 N    5/32<br>H 04 N    9/43 |

Der vorliegende Recherchenbericht wurde für alle Patentansprüche erstellt.

| Recherchenort<br>DEN HAAG | Abschlußdatum der Recherche<br>17-09-1985 | Prüfer<br>YVONNET J.W. |
|---|---|---|

EPA Form 1503 03 82